# EUROPEAN PATENT APPLICATION

(11) **EP 2 604 791 A2**
(43) Date of publication of application: **19.06.2013**
(21) Application number: 12195663.5
(22) Date of filing: 05.12.2012
(51) Int. Cl.: F01D 1/26, F01D 17/10

(54) **A propulsion engine**

(30) Priority: 16.12.2011 GB 201121641
(71) Applicant: Rolls-Royce plc, London SW1E 6AT (GB)
(72) Inventor: Edwards, David, Derby, Derbyshire DE22 1BP (GB); Nicholson, Richard, Derby, Derbyshire DE23 6EP (GB)
(74) Representative: Gee, Philip David

(57) **Abstract**

A propulsion engine for an aircraft, the propulsion engine comprising: one or more fans (1, 2) rotatably linked to one or more respective shafts (11); a driving means arranged to drive the one or more fans; and a first hydraulic pump-motor (10) connected to one of the fan shafts, the first hydraulic pump-motor comprising a cam (12) disposed about the shaft and one or more radially extending pistons (13) arranged to engage a surface of the cam, the cam and pistons being arranged such that the pistons reciprocate due to the rotation of the cam, wherein the first hydraulic pump-motor is arranged to selectively transfer a variable amount of power to or from the one or more fans so as to control the rotational speed of the one or more fans.

## Description

This invention relates to a propulsion engine and particularly but not exclusively relates to a propulsion engine for an aircraft.

### Background

A propfan engine is a modified turbofan engine and typically comprises an unducted fan arranged on the same axis as the compressor and/or turbine of a turbofan engine. In one example of a propfan engine, thrust is produced by a pair of contra-rotating unducted fans, which are driven by a free power turbine via a differential epicyclic gearbox.

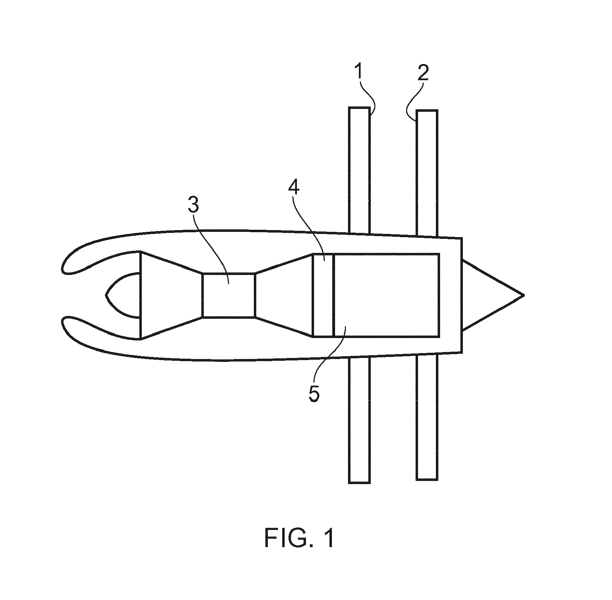

Figure 1 illustrates the basic engine architecture of such a contra-rotating propulsion engine. Contra-rotating propeller assemblies 1, 2 are driven by an engine core 3 supplying gas through a static structure 4 and inter-meshed free power turbines 5. The turbines 5 directly drive the propellers 1, 2 which, as indicated, are generally contra-rotating to provide propulsion for an aircraft, for example.

The angular pitch angle of the propellers 1, 2 may be changed by an appropriate mechanism in order to allow the propellers 1, 2 to operate efficiently throughout an operational flight.

By virtue of using a differential epicyclic gearbox (not shown), the speeds of the two unducted fans are free to vary relative to one another. However, to minimise noise and maximise efficiency, the ratio of the rotational speeds of the unducted fans should be well-controlled.

The rotational speeds of the unducted fans may be controlled by varying the pitch of the blades on one or both of the unducted fans, thereby adjusting the aerodynamic torque exerted on each unducted fan and hence their relative speeds. However, complex and heavy systems are required to actuate the variable pitch mechanisms.

The present invention therefore seeks to address these issues.

### Statements of Invention

According to a first aspect of the present invention there is provided a propulsion engine for an aircraft, the propulsion engine comprising: one or more fans rotatably linked to one or more respective shafts; a driving means arranged to drive the one or more fans; and a first hydraulic pump-motor connected to one of the fan shafts, the first hydraulic pump-motor comprising a cam disposed about the shaft and one or more radially extending pistons arranged to engage a surface of the cam, the cam and pistons being arranged such that the pistons reciprocate due to the rotation of the cam, wherein the first hydraulic pump-motor is arranged to selectively transfer a variable amount of power to or from the one or more fans so as to control the rotational speed of the one or more fans.

According to a second aspect of the present invention there is provided a speed controlling assembly for a propulsion engine, the propulsion engine comprising one or more fans rotatably linked to one or more respective shafts, wherein the speed controlling assembly comprises a first hydraulic pump-motor connectable to one of the fan shafts, the hydraulic pump-motor comprising a cam disposed about the shaft and one or more radially extending pistons arranged to engage a surface of the cam, the cam and pistons being arranged such that the pistons reciprocate due to the rotation of the cam; and wherein the hydraulic pump-motor is arrangeable to selectively transfer a variable amount of power to or from the one or more fans so as to control the rotational speed of the one or more fans.

The first hydraulic pump-motor may be configurable to operate in a pump mode in which power is extracted from the fan shaft. The first hydraulic pump-motor may be configurable to operate in a neutral mode in which substantially no power is extracted from or delivered to the fan shaft. The first hydraulic pump-motor may be configurable to operate in a motor mode in which power is delivered to the fan shaft.

The or each piston may be provided in a piston chamber. The or each piston may be arranged to selectively compress and expand a working fluid in the piston chamber. The first hydraulic pump-motor may further comprise one or more valves which may be arranged to selectively connect the working fluid in the piston chamber to a high pressure manifold and/or a low pressure manifold. The valves may be configured to permit the first hydraulic pump-motor to selectively operate in a pump, neutral or motor mode.

The hydraulic pump-motor may be configured to vary the valve position during rotation of the shaft. In the pump mode the valves may selectively connect the piston chambers to the low pressure manifold when the piston may be expanding the working fluid and the valves may selectively connect the piston chambers to the high pressure manifold when the piston may be compressing the working fluid. In the motor mode the valves may selectively connect the piston chambers to the high pressure manifold when the piston may be expanding the working fluid and the valves may selectively connect the piston chambers to the low pressure manifold when the piston may be compressing the working fluid. The hydraulic pump-motor, speed controlling assembly or propulsion engine may comprises a controller adapted to position the valves as the shaft rotates. The valves may open and close one or more times within a single revolution of the shaft.

The valves may comprise poppet valves. The poppet valves may be provided in a wall of the piston chamber. The valves may be servo actuated, e.g. by the controller. A first valve may connect a piston chamber to the low pressure manifold, whilst a second valve may connect the piston chamber to the high pressure manifold. The valves may comprise two-way valves. Two two-way valves may connect to each piston chamber. Alternatively, a three-way valve may connect to the piston chamber and the three-way valve may selectively connect the piston chamber to either the low pressure or high pressure manifold.

The propulsion engine may further comprise a second hydraulic pump-motor connected to a further fan shaft. The second hydraulic pump-motor may comprise a cam disposed about the further fan shaft and one or more radially extending pistons arranged to engage a surface of the cam. The cam and pistons may be arranged such that the pistons reciprocate due to the rotation of the cam. The second hydraulic pump-motor may be arranged to selectively transfer a variable amount of power to or from a further fan so as to control the rotational speed of the further fan.

The propulsion engine may comprise first and second fans. The first hydraulic pump-motor may be connected to the first fan so as to control the rotational speed of the first fan with respect to the rotational speed of the second fan. The second hydraulic pump-motor, if provided, may be connected to the second fan so as to control the rotational speed of the second fan with respect to the rotational speed of the first fan.

The first hydraulic pump-motor may be arranged to transfer power from the one or more fans to one or more propulsion engine or aircraft accessories.

The propulsion engine may comprise first and second fans. The driving means may comprise a differential assembly arranged to provide power to the first and second fans. The differential assembly may comprise a differential gear assembly, e.g. an epicyclic differential. The first and second fans may be driven by a free power turbine via the differential assembly.

The one or more fans may be unducted fans. The propulsion engine may be a propfan. The fans may be located towards the rear of the engine behind the engine intake. The fans may be arranged to rotate about the engine axis. Adjacent fans may rotate in opposite directions.

According to a third aspect of the present invention there is provided a method of controlling a propulsion engine for an aircraft, the propulsion engine comprising one or more fans rotatably linked to one or more respective shafts, wherein the method comprises: providing a first hydraulic pump-motor connected to one of the fan shafts, the hydraulic pump-motor comprising a cam disposed about the shaft and one or more radially extending pistons arranged to engage a surface of the cam, the cam and pistons being arranged such that the pistons reciprocate due to the rotation of the cam; driving the one or more fans by virtue of a driving means; selectively transferring a variable amount of power to or from the one or more fans by virtue of the hydraulic pump-motor; and controlling the rotational speed of the one or more fans.

The method may further comprise operating the first hydraulic pump-motor in a pump mode in which power is extracted from the fan shaft. The method may further comprise operating the first hydraulic pump-motor in a neutral mode in which substantially no power is extracted from the fan shaft. The method may further comprise operating the first hydraulic pump-motor in a motor mode in which power is delivered to the fan shaft.

### Brief Description of the Drawings

For a better understanding of the present invention, and to show more clearly how it may be carried into effect, reference will now be made, by way of example, to the accompanying drawings, in which:-
Figure 1 schematically shows the basic engine architecture of a propulsion engine; and
Figure 2 schematically shows a cross-section of a hydraulic pump-motor for a propulsion engine according to an example of the present invention.

### Detailed Description

With reference to Figure 1, a propulsion engine, according to an example of the present invention, comprises contra-rotating rotors, which may for example be first and second fans 1, 2. The first and second fans 1, 2 may be unducted fans and as such the propulsion engine may be an example of a propfan engine for an aircraft. In the example shown in Figure 1, the first and second unducted fans are located aft of a core 3 of the propulsion engine, but may alternatively be placed fore of the engine core 3. Although the first unducted fan 1 is shown as being located fore of the second unducted fan 2, in an alternative embodiment (not shown), the first unducted fan may be aft of the second unducted fan.

The first and second unducted fans 1, 2 are driven by a driving means in the form of a free power turbine 5 via a differential gear assembly, e.g. an epicyclic differential (not shown). The free power turbine 5 is in the gas stream from the engine core 3. The differential rotatably connects to an input shaft and first and second output shafts. The free power turbine 5 rotatably connects to the differential input shaft. The first and second fans 1, 2 rotatably connect to the first and second differential output shafts respectively. Accordingly, the first and second differential output shafts may also be referred to as first and second fan shafts. Since the differential gear assembly has one input and two outputs, the gear assembly acts as a torque splitting device. That is, the speed ratio varies relative to the torque delivery of each output shaft. If the torque output on one shaft is moderated by a parasitic drag, then the resulting speed alteration can be used to beneficial effect.

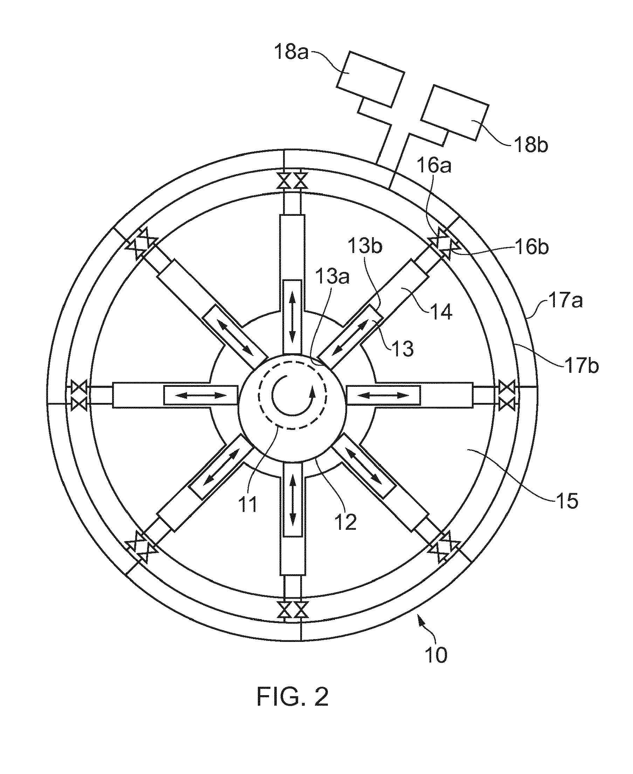

With reference to Figure 2, the propulsion engine further comprises a hydraulic pump-motor 10 which is provided about the first fan shaft 11 for the first unducted fan 1. It may be convenient to provide the hydraulic pump-motor 10 about or around the first unducted fan shaft 11 since the first unducted fan 1 is fore of the second unducted fan 2 and it is adjacent to a static (e.g. non-rotating) structure 4 within the propulsion engine. The static structure 4 may be readily used to mount static parts of the hydraulic pump-motor 10. However, a hydraulic pump-motor may additionally or alternatively be provided about a fan shaft for the second unducted fan 2.

As depicted, the first hydraulic pump-motor 10 comprises a cam 12 disposed about the shaft 11. The cam 12 may be circular in cross-section and it may be eccentric with respect to the shaft 11. In other words, the cam 12 may have a centre that is offset from the centre of the shaft 11 and the remainder of the hydraulic pump-motor 10. In an alternative arrangement, the cam may not be circular in cross-section and the cam may comprise one or more lobes disposed about the perimeter of the cam 12.

The hydraulic pump-motor 10 may further comprise one or more radially extending pistons 13. The pistons 13 may be constrained to radially reciprocate within one or more corresponding piston chambers 14. The piston chambers may be radially disposed with respect to the centre of the shaft 11. The piston chambers 14 may be provided in a hydraulic pump-motor housing 15, which, in contrast to the shaft and cam, is not free to rotate.

As shown, a plurality of pistons 13 may be provided in a corresponding plurality of piston chambers 14. The pistons and piston chambers may be equiangularly disposed about the hydraulic pump-motor 10. Increasing the number of pistons 13 may provide redundancy in the system, which may be desirable for reasons of safety or reliability. Each piston 13 and piston chamber 14 may also be suitably sized. For example, it may be preferable to have many (e.g. eight or more) relatively small pistons and piston chambers as this may allow a greater degree of variability and control.

At a first end 13a, the pistons 13 may be arranged to engage, e.g. slide or roll over, a surface of the cam 12. Thus, as the eccentric cam 12 rotates, the pistons 13 are urged to reciprocate within the piston chambers 14. The piston 13 may engage, e.g. contact, the cam directly or indirectly. For example, a friction reducing element, e.g. bearing, may be provided at the end of the piston which engages the cam 12. At a second end 13b, the pistons 13 may be arranged to selectively compress and expand a working fluid within the piston chambers 14.

In an alternative example (not shown) the piston and cam arrangement may be inverted. For example, the pistons and piston chambers may be provided in the rotating shaft with the cam being static and disposed about the shaft and pistons.

Referring still to Figure 2, the first hydraulic pump-motor 10 may further comprise one or more valves 16a, 16b arranged to selectively fluidly connect the working fluid in the piston chamber 14 to a high pressure manifold 17a and/or a low pressure manifold 17b. In the example shown, a first valve 16a may selectively fluidly connect the piston chamber 14 to the high pressure manifold 17a and a second valve 16b may selectively fluidly connect the piston chamber 14 to the low pressure manifold 17b. The high pressure manifold 17a may be in fluid communication with a high pressure source or reservoir 18a. The low pressure manifold 17b may be in fluid communication with a low pressure source or reservoir 18b.

The valves 16a, 16b may comprise poppet valves. The valves 16a, 16b may be provided adjacent to a surface defining the piston chamber 14. For example, a valve seat may be formed in the hydraulic pump-motor housing 15. The valves 16a, 16b may be provided at or towards an end of the piston chamber 14 opposite the second end 13b of the piston 13.

In an alternative arrangement, a three-way valve may connect to the piston chamber and the three-way valve may selectively connect the piston chamber to either the high pressure or low pressure manifold 17a, 17b. In either case a plurality of valves may be provided such that there are valves for each piston chamber 14.

When the cam 12 rotates and the piston 13 moves in a first direction, which tends to compress the working fluid in the piston chamber 14, the first valve 16a may open to allow fluid from the piston chamber 14 to be expelled to the high pressure manifold 17a. The second valve 16b may remain closed when the first valve 16a is open. By contrast, when the piston 13 moves in a second direction, which tends to expand the working fluid in the piston chamber 14, the second valve 16b may open to allow fluid from the low pressure manifold 17b to enter the piston chamber 14. The first valve 16a may remain closed when the second valve 16b is open.

Accordingly, the valve positions may change during rotation of the shaft 11. The valves may open and close automatically. For example, the valve may be operated by mechanical means, such as a spring backed one-way check valve, which may open in response to a pressure difference across the valve. Alternatively the valves may be activated by electrical means. For example, the valves may be servo-actuated and/or they may be independently controlled, e.g. via a controller. The controller may send a trigger signal to the valves to open or close the valve. Accordingly, the controller may control which valves are open and which are closed at a particular time. Such valves may be fast acting.

Pressure sensors may be provided in the piston chamber 14, manifolds 17a, 17b and/or reservoirs 18a, 18b to provide a signal to the controller. A rotation sensor on the shaft 11 and/or position sensors for the pistons 13 may also provide signals to the controller. These signals may assist the controller in deciding when to open and close particular valves.

The valve positions may also be monitored by a sensor and the resulting signal may also be monitored by the controller. The valve position sensor signal may thus provide an independent verification of the trigger signal sent to the valves by the controller.

The hydraulic pump-motor 10 may be configured to operate in a pump mode such that torque is extracted from the first fan shaft 11. In the pump mode, selected first valves 16a may be opened to piston chambers 14 which at that particular time are being compressed by the respective piston 13 due to the rotation of the cam. By contrast, selected second valves 16b may be opened to piston chambers 14 which at that particular time are being expanded by the respective piston 13 due to the rotation of the cam 12. All other valves may be closed. In this way, work is done by the hydraulic pump to draw in working fluid from the low pressure manifold 17b, compress the fluid and expel it to the high pressure manifold 17a. As such, hydraulic power may be delivered to the hydraulic reservoir 18a and torque may be taken from the fan shaft 11, thereby slowing down first fan 1.

The hydraulic pump-motor 10 may be configured to operate in a motor mode such that torque is delivered to the first fan shaft 11. In the motor mode, selected first valves 16a may be opened to piston chambers 14 which at that particular time are being expanded by the respective piston 13 due to the rotation of the cam. By contrast, selected second valves 16b may be opened to piston chambers 14 which at that particular time are being compressed by the respective piston 13 due to the rotation of the cam 12. All other valves may be closed. In this way, work is provided to the hydraulic motor by the high pressure working fluid from the high pressure manifold 17a expanding against the pistons 13 and subsequently being expelled to the low pressure manifold 17b. As such, hydraulic power may be drawn from the hydraulic reservoir 18a and torque may be delivered to the fan shaft 11, thereby speeding up first fan 1.

Alternatively, all first valves 16a or all second valves 16b may be open to their respective manifolds 17a, 17b. In either case no load is presented or power provided to the hydraulic pump-motor 10 as the working fluid is simply moved about either the high pressure manifold 17a or low pressure manifold 17b respectively. In other words, as fluid is being expelled by a piston 13 on a first side of the hydraulic pump-motor it is being drawn in at the same rate by a piston at a second side of the hydraulic pump-motor. Thus, in this mode substantially no power is extracted from or delivered to the fan shaft 11. Accordingly, in this neutral mode, there is no need for a clutch between the hydraulic pump-motor 10 and the shaft 11. A simpler arrangement is thus provided and the mechanical losses and weight associated with a clutch are avoided. The reduction in weight is a key parameter in the case of the propulsion engine being used on an aircraft.

The valves 16a, 16b may be configured, e.g. by the controller, to permit the hydraulic pump-motor 10 to selectively operate in the pump, neutral or motor modes. The number of valves operated by the controller may be varied to modulate the power consumed or delivered. For example, the controller may only operate the valves for alternate piston chambers 14, leaving the remainder open to the low pressure manifold 17b, in order to halve the power consumption. The valve settings between pump, neutral operation, and motor mode may be rapidly selected independently on each piston chamber and within a single shaft revolution to give a wide range of possible power modulation options.

The hydraulic pump-motor 10 is arranged to selectively transfer a variable amount of power to or from the first unducted fan 1 so as to control the rotational speed of the first unducted fan 1 with respect to the rotational speed of the second unducted fan 2. For example, increasing the power removed from the first unducted fan 1 reduces the rotational speed of the first unducted fan. Similarly, reducing the power removed from the first unducted fan 1 (or increasing the power transferred to the first unducted fan) increases the rotational speed of the first unducted fan (power may be transferred from the hydraulic pump-motor to the first unducted fan). In other words, if the first unducted fan 1 begins to run faster than desired, the hydraulic pump-motor 10 may exert a higher braking torque on the first unducted fan. As a result, the first unducted fan 1 will slow down to the required speed. Conversely, if the first unducted fan 1 runs more slowly than intended, a reduction in the power taken from the first unducted fan 1 allows the first unducted fan to return to its target speed. The rotational speed of the first unducted fan may therefore be controlled in this manner. The rotational speeds of the first and second unducted fans may be more closely matched in order to increase the efficiency and reduce the noise of the propulsion engine.

The hydraulic pump-motor generates or uses hydraulic power. Some of this hydraulic power may be used to supplement other hydraulic power sources on a typical aircraft engine. For example, power extracted from the first unducted fan 1 may be passed to one or more engine accessories, such as a fuel pump, oil pump or generator. However, some or all of the hydraulic power may be stored in an accumulator. The stored hydraulic power may provide a 'power-back to rotor' capability to reduce rotor load, and thus increase the rotational speed of the first fan relative to the second.

The hydraulic pump-motor 10 extracts a variable amount of power from the first unducted fan 1, thereby allowing fine control of the fan speed. The optimum speed ratio between the first and second unducted fans, both for efficiency and for noise control may therefore be maintained. The speed of the first and second fans may also be controlled by varying the geometry of the aerofoil structures (e.g. fan blades). For example, the propulsion engine may further comprise a variable pitch mechanism which is arranged to reconfigure the geometry of the fan blades (e.g. coarse pitch, fine pitch, feather or reverse thrust). However, with the present invention closed-loop fine control of the rotational speed of the first unducted fan may be achieved without reconfiguring the fan blades. The "fine-tuning" mechanism of the present invention reduces the need for accuracy of blade positioning between the two unducted fans, although tight control of blade-to-blade pitch variation within individual fans may still be desirable.

In the case of the propulsion engine being used for an aircraft, the amount of power drawn from the first unducted fan 1 may vary at different points in the flight cycle. For example, during descent, engine speed could be kept high and accessory demand satisfied at very low fuel flow rates if a lot of power was taken from the first unducted fan 1, by capturing gravitational potential energy as the aircraft descends. A further benefit is that the descent angle of the aircraft will increase at this lower thrust level, thereby reducing the environmental impact of aircraft noise around airports.

In an alternative embodiment not shown, the second unducted fan may also be provided with a hydraulic pump-motor so that the rotational speeds of both the first and second unducted fans may be controlled. Hydraulic power may be passed between the hydraulic pump-motors of the first and second fans in order to regulate their respective speeds.

## Claims

1. A propulsion engine for an aircraft, the propulsion engine comprising:
one or more fans (1) rotatably linked to one or more respective shafts (11);
a driving means (5) arranged to drive the one or more fans; and
a first hydraulic pump-motor (10) connected to one of the fan shafts, the first hydraulic pump-motor comprising a cam (12) disposed about the shaft and one or more radially extending pistons (13) arranged to engage a surface of the cam, the cam and pistons being arranged such that the pistons reciprocate due to the rotation of the cam,
wherein the first hydraulic pump-motor is arranged to selectively transfer a variable amount of power to or from the one or more fans so as to control the rotational speed of the one or more fans.

2. The propulsion engine of claim 1, wherein the first hydraulic pump-motor is configurable to operate in a pump mode in which power is extracted from the fan shaft and/or is configurable to operate in a motor mode in which power is delivered to the fan shaft and/or is configurable to operate in a neutral mode in which substantially no power is extracted from or delivered to the fan shaft.

3. The propulsion engine of any preceding claim, wherein the or each piston is provided in a piston chamber (14), the or each piston being arranged to selectively compress and expand a working fluid in the piston chamber.

4. The propulsion engine of claim 3, wherein the first hydraulic pump-motor further comprises one or more valves (16a, 16b) arranged to selectively connect the working fluid in the piston chamber to a high pressure manifold (17a) and/or a low pressure manifold (17b).

5. The propulsion engine of claim 4, wherein the valves are configured to permit the first hydraulic pump-motor to selectively operate in a pump, neutral or motor mode.

6. The propulsion engine of claim 3 or 4, wherein the hydraulic pump-motor is configured to vary the valve position during rotation of the shaft.

7. The propulsion engine of any preceding claim, wherein the propulsion engine further comprises:
a second hydraulic pump-motor connected to a further fan shaft, the second hydraulic pump-motor comprising a cam disposed about the further fan shaft and one or more radially extending pistons arranged to engage a surface of the cam, the cam and pistons being arranged such that the pistons reciprocate due to the rotation of the cam,
wherein the second hydraulic pump-motor is arranged to selectively transfer a variable amount of power to or from a further fan so as to control the rotational speed of the further fan.

8. The propulsion engine according to any preceding claim, wherein the propulsion engine comprises first and second fans and the first hydraulic pump-motor is connected to the first fan so as to control the rotational speed of the first fan with respect to the rotational speed of the second fan.

9. The propulsion engine according to any preceding claim, wherein the first hydraulic pump-motor is arranged to transfer power from the one or more fans to one or more propulsion engine or aircraft accessories.

10. The propulsion engine according to any preceding claim, wherein the propulsion engine comprises first (1) and second fans (2) and the driving means comprises a differential assembly arranged to provide power to the first and second fans.

11. The propulsion engine according to any preceding claim, wherein the one or more fans are unducted fans.

12. A speed controlling assembly for a propulsion engine, the propulsion engine comprising one or more fans (1) rotatably linked to one or more respective shafts (11),
wherein the speed controlling assembly comprises a first hydraulic pump-motor (10) connectable to one of the fan shafts, the hydraulic pump-motor comprising a cam (12) disposed about the shaft and one or more radially extending pistons (13) arranged to engage a surface of the cam, the cam and pistons being arranged such that the pistons reciprocate due to the rotation of the cam; and
wherein the hydraulic pump-motor is arrangeable to selectively transfer a variable amount of power to or from the one or more fans so as to control the rotational speed of the one or more fans.

13. A method of controlling a propulsion engine for an aircraft, the propulsion engine comprising one or more fans (1) rotatably linked to one or more respective shafts (11), wherein the method comprises:
providing a first hydraulic pump-motor (10) connected to one of the fan shafts, the hydraulic pump-motor comprising a cam (12) disposed about the shaft and one or more radially extending pistons (13) arranged to engage a surface of the cam, the cam and pistons being arranged such that the pistons reciprocate due to the rotation of the cam;
driving the one or more fans by virtue of a driving means (5);
selectively transferring a variable amount of power to or from the one or more fans by virtue of the hydraulic pump-motor; and
controlling the rotational speed of the one or more fans.

14. The method of claim 13, wherein the method further comprises operating the first hydraulic pump-motor in a pump mode in which power is extracted from the fan shaft and/or operating the first hydraulic pump-motor in a motor mode in which power is delivered to the fan shaft.

15. The method of claim 13 or 14, wherein the method further comprises operating the first hydraulic pump-motor in a neutral mode in which substantially no power is extracted from the fan shaft.
